## Europäisches Patentamt

## European Patent Office

## Office européen des brevets

(19)

(11) Veröffentlichungsnummer: **0 367 837**

**A2**

(12) **EUROPÄISCHE PATENTANMELDUNG**

(21) Anmeldenummer: **88118337.0**

(22) Anmeldetag: **03.11.88**

(51) Int. Cl.⁵: **G02B 3/00, G02B 6/42**

(30) Priorität: **06.11.87 DE 3737810**

(43) Veröffentlichungstag der Anmeldung:
**16.05.90 Patentblatt 90/20**

(84) Benannte Vertragsstaaten:
**DE FR GB NL**

(71) Anmelder: **Siemens Aktiengesellschaft**
**Wittelsbacherplatz 2**
**D-8000 München 2(DE)**

(72) Erfinder: **Karstensen, Holger, Dr.**
**Wörthstrasse 35**
**D-8000 München 80(DE)**

(54) Sphärische Plankonvexlinse zur optischen Kopplung eines Halbleiterlasers an einen optischen Wellenleiter.

(57) Mit einer halbkugelförmigen Plankonvexlinse aus Silizium läßt sich ein hoher Koppelwirkungsgrad von einem Halbleiterlaser zu einem Wellenleiter erreichen. Die Erzielung eines hohen Koppelwirkungsgrades ist in der optischen Nachrichtentechnik von Interesse. Es soll eine Linse angegeben werden, mit der ein noch höherer Koppelwirkungsgrad erzielbar ist, wie er bei der bekannten Linse erreicht wird.

Die neue Linse ist eine sphärische Plankonvexlinse aus Silizium oder Germanium, deren Dicke (D) größer als der Radius (R) der sphärisch konvexen Linsenfläche (kL), aber noch so klein ist, daß der laserseitige Brennpunkt (F1) der Linse (1) mit Abstand (d) von der planen Linsenfläche (pL) außerhalb der Linse liegt.

EP 0 367 837 A2

**Sphärische Plankonvexlinse zur optischen Kopplung eines Halbleiterlasers an einen optischen Wellenleiter**

Die Erfindung betrifft eine sphärische Plankonvexlinse zur optischen Kopplung eines Halbleiterlasers an einen optischen Wellenleiter nach dem Oberbegriff des Patentanspruchs 1.

Eine Linse der genannten Art ist aus Techn. Digest, Conf. on Opt. Fiber Commun., Optical Fiber Sensors '85, San Diego, 1985 bekannt. Diese Linse besteht aus Silizium, ist halbkugelförmig und hat eine sehr niedrige sphärische Aberration, wodurch eine Linse gegeben ist, mit der ein hoher Koppelwirkungsgrad vom Halbleiterlaser zum Wellenleiter erreicht wird. Ein hoher Koppelwirkungsgrad ist in der optischen Nachrichtentechnik wegen der damit verbundenen höheren Streckenlänge von Interesse.

Aufgabe der Erfindung ist es, eine Linse zu schaffen, mit der ein noch höherer Koppelwirkungsgrad erzielbar ist, wie er bei der bekannten Linse der eingangs genannten Art erreicht wird.

Diese Aufgabe wird ausgehend von einer Linse der eingangs genannten Art durch die im kennzeichnenden Teil des Patentanspruchs 1 angegebenen Merkmale gelöst.

Die erfindungsgemäße Linse ist dahingehend optimiert, daß ein geringer Abstand zwischen Brennpunkt und planer Linsenfläche eingehalten wird, der einen Kompromiß zwischen minimaler sphärischer Aberration und damit hohem Koppelwirkungsgrad und einem genügendem Schutz des Halbleiterlasers gegen mechanische Beschädigung bei de Justage darstellt.

Je höher die Brechzahl des für die Laserstrahlung transparenten brechenden Materials der Linse ist, desto geringer ist die sphärische Aberration. Es ist daher vorteilhaft, die Brechzahl dieses Materials möglichst hoch zu wählen.

Bei einer bevorzugten Ausführungsform der efindungsgemäßen Linse besteht diese gemäß Anspruch 2 aus Silizium, das eine Brechzahl von 3,5 hat und bei Wellenlängen über 1,1 $\mu$m transparent ist. Diese Linse hat eine geringere sphärische Aberration als die bekannte Linse aus Silizium.

Bei einer anderen bevorzugten Ausführungsform der erfindungsgemäßen Linse besteht diese gemäß Anspruch 3 aus Germanium, das eine noch höhere Brechzahl von 4,0 hat und für Wellenlängen bis über 20 $\mu$m geeignet ist. Auch diese Linse hat eine geringere sphärische Aberration als die bekannte Linse aus Silizium.

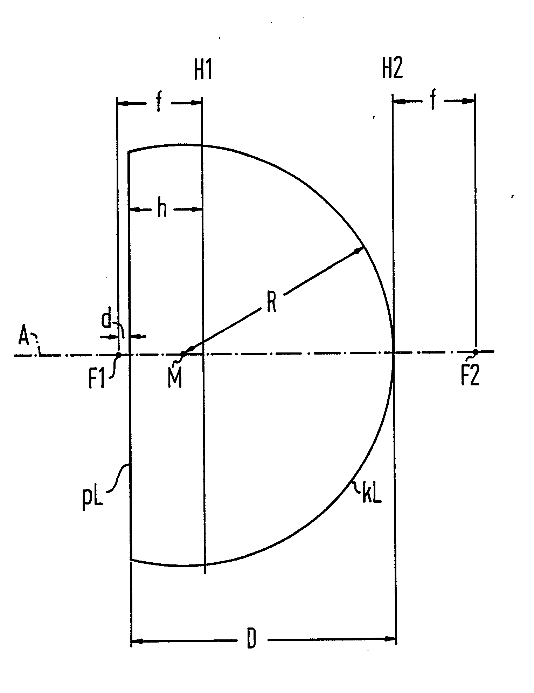

Die erfindungsgemäße Linse ist in Seitenansicht in der Figur dargestellt, wobei in dieser Figur alle wesentlichen optischen Bestimmungsstücke der Linse eingetragen sind.

In der Figur is die plane Linsenfläche pL und die sphärisch konvexe Linsenfläche mit kL bezeichnet. Die optische Achse der Linse ist mit A und ihre Dicke mit D bezeichnet. M bedeutet den Mittelpunkt und R den Radius der sphärisch konvexen Linsenfläche kL. Der laserseitige Brennpunkt ist mit F1 und der wellenleiterseitige Brennpunkt mit F2 bezeichnet. Der Laserfleck, von dem die Laserstrahlung ausgeht, ist im Brennpunkt F1 anzuordnen, während im anderen Brennpunkt F2 eine zum Einkoppeln dienende Stirnfläche des Wellenleiters anzuordnen ist. Die dem laserseitigen Brennpunkt F1 zugeordnete Hauptebene der Linse ist mit H1 bezeichnet. Die dem wellenleiterseitigen Brennpunkt F2 zugeordnete Hauptebene der Linse ist mit H2 bezeichnet. Die Brennweite der Linse ist mit f bezeichnet. Der laserseitige Brennpunkt F1 ist in einem kleinen Abstand d von der planen Linsenfläche pL außerhalb der Linse angeordnet. Die Dicke D der Linse ist größer als der Radius R der sphärisch konvexen Linsenfläche kL. Für die Brennweite f gilt f = R/(n-1) und für den Abstand h der planen Linsenfläche pL von der Hauptebene H1 gilt h = D/n, wobei n die Brechzahl des transparenten Materials der Linse ist.

Die Linse kann auf sehr einfache Weise durch Abschleifen einer Kugel, vorzugsweise einer Siliziumkugel oder einer Germaniumkugel erfolgen.

Zur Vermeidung von Reflexionsverlusten muß die Linse für die Betriebswellenlänge oder den Betriebswellenlängenbereich entspiegelt werden. Diese Entspiegelung kann einfach in konventioneller Weise durch Aufdampfen von reflexionsmindernden Schichten vorgenommen werden.

**Ansprüche**

1. Sphärische Plankonvexlinse zur optischen Kopplung eines Halbleiterlasers an einen optischen Wellenleiter, insbonddere für die optische Nachrichtentechnik, wobei die Linse zwischen dem Laser und dem Wellenleiter im Strahlengang der vom Laser emittierten Laserstrahlung mit ihrer planen Linsenfläche (pL) dem Laser zugekehrt anzuordnen ist, und die Linse aus einem für die Laserstrahlung transparenten brechenden Material besteht, **dadurch gekennzeichnet,** daß die von der planen Linsenfläche (pL) zum gegenüberliegenden Scheitelpunkt der sphärisch konvexen Linsenfläche (kL) der Linse gemessene Dicke (D) der Linse größer als der Radius (R) der sphärisch konvexen Linsenfläche (kL), aber noch so klein ist, daß der laserseitige Brennpunkt (F1) der Linse mit Abstand (d) von der planen Linsenfläche (pL) außerhalb der Linse liegt.

2. Linse nach Anspruch 1, **dadurch gekennzeichnet,** daß das transparente brechende Material der Linse Silizium ist.

3. Linse nach Anspruch 1, **dadurch gekennzeichnet,** daß das transparente brechende Material der Linse Germanium ist.